# EUROPEAN PATENT SPECIFICATION

(11) **EP 2 654 355 B1**
(45) Date of publication and mention of the grant of the patent: **09.09.2015**
(21) Application number: 13177171.9
(22) Date of filing: 11.01.2010
(51) Int. Cl.: H04W 64/00, H04L 12/413, H04L 12/28, H04L 12/24

(54) **Method for locating a network node of an indoor communication network, network node, second network node, and indoor communication network thereof**
Verfahren zur Lokalisierung eines Netzknotens eines Innenraumkommunikationsnetzes, Netzknoten, zweiter Netzknoten und Innenraumkommunikationsnetz
Procédé de localisation d'un noeud de réseau d'un réseau de communication intérieur, noeud de réseau, noeud de réseau secondaire et réseau communication intérieur correspondant

(43) Date of publication of application: 23.10.2013
(62) Divisional of application: 10305022.5
(73) Proprietor: ALCATEL LUCENT, 92100 Boulogne-Billancourt (FR)
(72) Inventor: Hettstedt, Heinz-Dieter, 30179 Hannover (DE); Brunsch, Dietmar, 30179 Hannover (DE); Schomburg, Ekkehard, 201613 Shanghai (CN); Hofmann, Dirk, 70435 Stuttgart (DE)
(74) Representative: Kleinbub, Oliver

(56) References cited:
- EP-A1- 1 361 702
- EP-A1- 1 819 133
- KR-A- 20090 063 085
- US-A1- 2003 216 144
- US-A1- 2009 093 230
- "Telecommunications and Internet converged Services and Protocols for Advanced Networking (TISPAN); Analysis of Location Information Standards produced by various SDOs; Draft ETSI TS 1XX XXX", ETSI STANDARDS, LIS, SOPHIA ANTIPOLIS CEDEX, FRANCE, no. V0.5.1, 1 December 2007 (2007-12-01), XP014040922, ISSN: 0000-0001

## Description

### FIELD OF THE INVENTION

The invention relates to a mobile station for locating the mobile station in an indoor communication network.

### BACKGROUND

Mobile devices such as mobiles, PDAs (PDA = Personal Digital Assistant), notebooks etc. of users of a mobile communication system can be located by a triangulation method. The triangulation method may be based on transmitting radio signals from a mobile device to at least two positions of a portable base station or to a first position of a first fixed base station and to a second position of a second fixed base station or may be based on transmitting radio signals from at least three transmitters of a satellite based or ground base positioning system such as GPS (GPS = Global Positioning System) to the mobile device, if the mobile device comprises a receiver for the radio signals of the satellite based or ground base positioning system and if the mobile device comprises a position determining unit.

In an indoor environment, radio signals being transmitted from the mobile device to external base stations of the mobile communication system may be reflected several times by obstacles of the indoor environment and therefore, a receiving direction of the radio signals may be not suitable for determining an accurate location of the mobile device by the triangulation method. Furthermore, the radio signals of the satellite based positioning system may be attenuated to a large extend and therefore may be not receivable by the mobile device.

An indoor communication system, which is connected via a base station interface and a base station to a cellular mobile communication system, and which comprises RRHs (RRH = remote radio head) as relay nodes between the mobile device and the base station, may be used for locating the mobile device. The mobile device can be located for example by receiving a radio signal from the mobile device via several of the RRHs at the base station, wherein each of the several RRHs add a unique delay to the radio signal, wherein the base station reports a delay signature or profile to a position determining entity, or wherein the position determining entity determines a position of the mobile device based on the delay signature or profile. In a further example, strength of radio signals received via different paths may be used to refine the location of the mobile device within a building.

Radiating cables are used for establishing a radio connection between a base station and mobile devices located in buildings or tunnels. If a radiating cable comprises an attenuator between opposing ends of the radiating cable, power levels on opposing ends of the radiating cable can be measured and compared and a position of the mobile device can be determined.

Especially in emergency situations, for example when a building is burning, when a building has been hijacked, or when an explosion has been occurred in a building, it is required to locate mobile devices to find users of the mobile devices in a fast way.

If the indoor communication system is connected to the cellular mobile communication system, there is a need to request the location of the mobile device from an operator of the cellular mobile communication system. Such a request delays a beginning of a localisation of the mobile devices. Persons in a building comprising the indoor communication system, which don't use a mobile device cannot be located via a mobile device.

US 2010/0254292 A1 discloses a method for maintaining system interference at a low level, when two or more users use one resource region in a wireless mobile communication system. A TCP message is transmitted from a base station as a broadcast to mobile stations. The TCP message contains a TPC1, which has been determined by the base station and which may indicate an amount of power change for one or several mobile stations. The mobile stations adjust transmission power according to the received TPC1.

EP 1361702 A1 describes a hierarchical wireless network, which is comprises of a first level configured for wired coupling to an IP network and of a second level, wired to the first level by a distribution system and comprised of at least two access points. Paging or the address resolution protocol is used for locating mobile stations. ARP messages are broadcasted periodically throughout the distribution system for updating an ARP cache.

### SUMMARY

The way of locating persons in a building by an indoor communication network affects a locating method, network nodes of the indoor communication network, and the indoor communication network.

Therefore, it is an object of the invention to provide an improved locating method, improved network nodes of the indoor communication network, and an improved indoor communication network.

The object is achieved by a mobile station according to claim 1.

The object is further achieved by a method according to claim 8.

The invention provides a first benefit of triggering a locating method for specific situations such as emergencies. Thereby, the network nodes of the indoor communication network are not required to permanently send messages, notifications or indications with identifiers of the locations of the first network nodes such as mobile stations. This reduces network traffic on links of the indoor communication network and reduces processing steps within the network nodes. Furthermore, a permanent locating method may be prohibited due to national legal reasons.

The invention provides a second benefit of providing a possibility to trigger the locating method by a network node of the indoor communication network. If the indoor communication network may be connected to a cellular mobile radio network, there is no need to request and trigger the locating method for example by an operator of the cellular mobile radio network. Thereby, triggering of the locating method in case of an emergency can be accelerated.

The invention provides a third benefit of using the identifier of the location of the first network node for presenting the location of the first network node at the second network node.

Preferably, the request is a broadcast or a multicast. This provides a benefit of transmitting a location request to all network nodes of the indoor communication network or to a group of network nodes of the indoor communication network. Thereby, only a single message has to be transmitted from the second network node. The multicast provides a further benefit of limiting the request to network nodes, which are adapted to monitor interactions of persons with the indoor communication network. Thereby, processing load at further network nodes can be avoided, which are not capable to monitor interactions of persons.

According to two embodiments of the invention, the network node is the first network node or the network node is a third network node comprising the identifier of the location of the first network node. This provides the possibilities to send the request either directly to the first network node or to send the request to the third network, which is capable to comprise one or several identifiers of locations of one or several first network nodes. Thereby, the third network may collect the identifiers of the locations of several first network nodes.

In a further embodiment of the invention, the first network node is a user terminal, the request is transmitted to the third network node, and the method further comprises the steps of monitoring at the third network node at least one uplink power level of at least one communication link of the user terminal, and comparing at the third network node the at least one uplink power level with a predefined power threshold, and the response is transmitted, if the at least one uplink power level equals or exceeds the predefined power threshold.

This offers for example a benefit of an add-on technical solution to an existing indoor communication network to locate user terminals in the indoor communication network, which have an active communication link for example to a further user terminal of the indoor communication network, to a server of the indoor communication network, or to a further user terminal or server of an external communication network connected to the indoor communication network. The predefined power threshold can be measured at network nodes of the indoor communication network or at links between network nodes of the indoor communication network. The predefined power threshold may be adapted to or above an average or a peak noise level to prevent measuring errors. The further embodiment may be preferably used in indoor communication networks using analogue signals on the communication links.

In an even further embodiment of the invention, the method further comprises the steps of converting by at least one analogue-to-digital converter of the indoor communication network at least one analogue uplink signal of the at least one communication link into at least one digital uplink signal, and counting occupied bits of the at least one digital uplink signal as a measure of the at least one uplink power level. The even further embodiment offers a benefit of measuring uplink power levels preferably at network nodes of the indoor communication network, which uses digital signals on the communication links. The counting may be executed for example at the at least one analogue-to-digital converter, at a switch, or at a hub of the indoor communication network.

In a preferred embodiment of the invention, the indoor communication network is connected via a base station interface to a base station of a cellular mobile radio network, the first network node is a mobile station, the indoor communication network comprises a radio remote head, the radio remote head comprises at least one wireless communication interface used for a communication link between the radio remote head and the mobile station, and the third network node is the base station interface or the radio remote head.

This provides a first advantage of measuring the uplink power levels at the base station interface, which may be also denoted as a master unit, or at the radio remote head, which may be also denoted as a remote unit. Due to a much smaller coverage area of the radio remote head than a coverage area of an antenna of a sector of a base station, an accuracy of a determination of the location of the mobile station can be significantly increased.

The preferred embodiment provides a second advantage of not being required to contact and engage an operator of the cellular mobile radio network, because all locating steps are performed at network nodes of the indoor communication network.

In a further preferred embodiment of the invention, the first network node is a mobile station, and the method further comprises the steps of broadcasting or multicasting a message from the second network node to the mobile station for setting the mobile station in an active mode, and setting the mobile station in the active mode by the activation message. The even further embodiment offers for example a possibility of a faster localization of mobile stations, which are in an idle mode, when the locating method starts, because mobile stations in an idle mode only send single location updates with a time interval of several minutes or even several hours. In the active mode with an established communication link and with a continuous flow of uplink radio signals or uplink data packets the localization is much faster and much easier, because a location of a mobile station can be narrowed down to a coverage area of a radio remote head.

In an even further preferred embodiment of the invention, the method further comprises the steps of broadcasting or multicasting from the second network node a message to mobile station for stopping uplink signal generation of at least one communication link, stopping at the mobile station the uplink signal generation for the at least one communication link, transmitting from the mobile station a predefined uplink signal, and deducing from the at least one uplink power level of the predefined uplink signal a number of the mobile station. This provides a benefit of not only locating mobile stations in the indoor communication network but also of counting a number of mobile stations in a predefined area such as a coverage area of a radio remote head, if all mobile stations or a group of mobile stations transmit a same predefined uplink signal. Thereby, rescue teams are able to coordinate their manpower to a distribution of persons in a building. Preferably, the signal generation is stopped only for a predefined time limit, so that for example users of a mobile phone are able to transmit emergency calls after the predefined time limit.

In another embodiment of the invention, the first network node is a motion detector or a video camera, and the response is transmitted, if the motion detector or the video camera monitors movement events of at least one person.

This offers a first advantage of locating persons in a building, which are not using a network node of the indoor communication network as a user terminal such as a mobile station or a PC (PC = personal computer) for example at a time of an emergency. Preferably, the video camera or a network node of the indoor communication network may comprise an image evaluation computer program product, which is able to detect movements automatically for example by comparing subsequent images of the video camera. This offers a second advantage of not requiring supervision personnel looking at a monitor, which is connected to the video camera.

In a further embodiment of the invention, the method further comprises the steps of monitoring at the first network node or at the third network node at least one interaction between at least one person and the first network node, and storing at the third network node at least one time stamp and the identifier of the location of the first network node for the at least one interaction, and the response is transmitted, if the at least one time stamp is within a predefined time frame.

The further embodiment offers a first benefit of locating one or more first network nodes, where an interaction of a person with the one or more first network nodes has taken place within a predefined time frame, which belongs for example to a time interval between a starting time of an emergency and a point of time several seconds or minutes immediately before the starting time of the emergency. Thereby, persons can be located, which have caused interactions with the indoor communication network at the starting time of the emergency or within the predefined time frame before the starting time of the emergency. The further embodiment offers a second benefit of storing the at least one time stamp and the identifier of the location of the first network node for the interactions preferably at a secured network node of the indoor communication network for example by locating the network node in a secured room or by using password secured and/or encrypted data on the network node to comply for example with national laws according to data security and surveillance.

In preferred embodiments of the inventions, the at least one interaction is either of the following: interaction with files on a server, interaction with webpages of the Internet or an intranet, movement event, telephone call, file transfer. These interactions offer a large variety of possibilities to monitor and store interactions of persons in a building with network nodes of the indoor communication network to be able to locate as much persons as possible.

In a further preferred embodiment of the invention, the method further comprises the steps of forwarding the identifier of the location of the first network node or a description of the location of the first network node from the second network node to a portable device, and guiding a user of the portable device to the location of the first network node.

The further preferred embodiment of the invention, provides a first advantage of guiding for example rescue teams, which are not familiar with a floor plan or a room layout of a building or which are not aware of for example fixed locations of the first network nodes such as desktop computers, motion sensors, or radio remote heads. Thereby detours to the locations of the first network nodes can be avoided and persons near the first network nodes can be located in a fast way. The guiding may be provided for example by transmitting specific beacon signals from specific radio remote heads, receiving the specific beacon signals at the portable device, and comparing the specific beacon signals with a map of a building stored at the portable device and which comprises for example a mapping between locations of the specific beacon signals and rooms of the building. A second advantage is based on a possibility to guide for example rescue teams in an opposite direction from the first network node without detours to an exit of the building.

In even further preferred embodiments of the invention, the identifier of the location of the first network node is either of the following: MAC address, IP address, coordinates of a satellite based or ground based positioning system. These even further preferred embodiments of the invention provide several possibilities for the identifier of the location of the first network node. If the first network nodes are mobile stations, the identifier of the location of the first network nodes are identifiers of the third network nodes such as radio remote heads or access points with communication links to the mobile stations.

The description of the location of the first network node may be either of the following: a number of a room of a building, a number of a hall of the building, a number of a floor of the building, a description of a subarea of the building.

These identifiers offer a large variety of possibilities and levels of detail to present one or several locations of the first network node for example on a display near an entrance of the building or on a print-out printed by a printer near the entrance of the building.

Further advantageous features of the invention are defined and are described in the following detailed description of the invention.

### BRIEF DESCRIPTION OF THE FIGURES

The embodiments of the invention will become apparent in the following detailed description and will be illustrated by accompanying figures given by way of non-limiting illustrations.
Figure 1 shows schematically a block diagram of a building with an indoor communication network according to a first embodiment of the invention.
Figure 2 shows schematically a block diagram of a building with an indoor communication network and a cellular mobile radio network according to a second embodiment of the invention.
Figure 3 shows schematically a block diagram of a method for locating network nodes according to the first embodiment, the second embodiment, and further embodiments of the invention.
Figure 4 shows schematically a block diagram of a method for locating network nodes according to an even further embodiment of the invention.
Figure 5 shows schematically a block diagram of a method for locating network nodes according to a further preferred embodiment of the invention.
Figure 6 shows schematically a block diagram of a first network node according to the embodiments of the invention.
Figure 7 shows schematically a block diagram of a second network node according to the embodiments of the invention.
Figure 8 shows schematically a block diagram of a third network node according to the embodiments of the invention.

### DESCRIPTION OF THE EMBODIMENTS

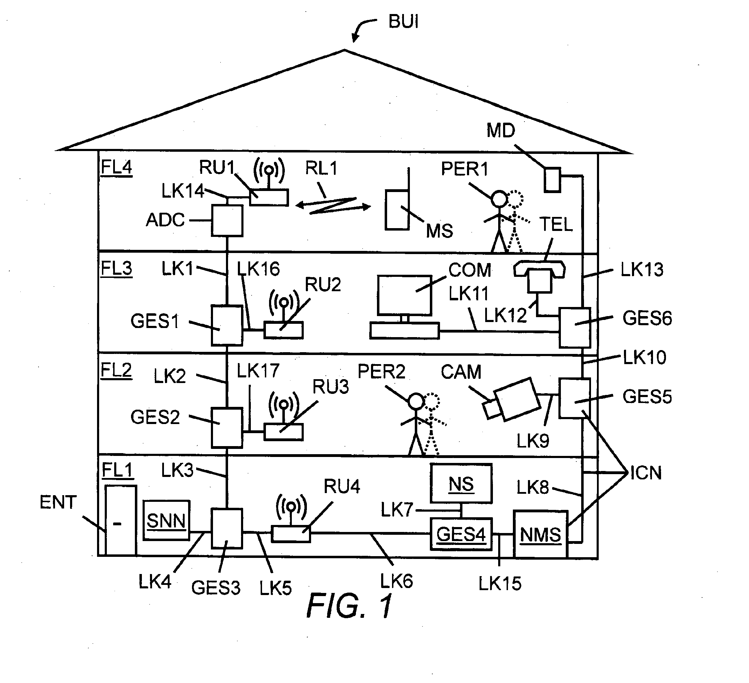

Figure 1 shows schematically in a block diagram a building BUI with an indoor communication network ICN located within the building BUI according to a first embodiment of the invention.

The building BUI may be for example a residential house, an office building, a factory, a tunnel, a mine, a fairground, a railway station, or an airport.

The indoor communication network ICN may be for example a local area network based on the Ethernet protocol IEEE 802.3 (IEEE = Institute of Electrical and Electronics Engineers).

In further alternatives, the indoor communication network ICN may be based on Token Ring protocol or Token Bus protocol. In an even further alternative, the indoor communication network ICN may be for example a next generation home network such as G.hn, which is specified according to physical layer and architecture in ITU Recommendation G.9960 (ITU = International Telecommunication Union).

The communication links LK1, ..., LK13 may use optical fibres such as monomode fibres, a twisted pair RF cabling such as based on a CAT5 cable (CAT5 = Category 5), or radio frequency links as a transport medium.

The indoor communication network ICN may use analogue signals or digital signals on the communication links LK1, ..., LK13.

The indoor communication network ICN may comprise Gigabit Ethernet switches GES1, GES2, GES3, GES4, GES5, GES6 (GES = Gigabit Ethernet Switch) for connecting network nodes RU1, RU2, RU3, RU4, ADC, MD, CAM, COM, TEL, NMS, NS, SNN via communication links LK1, LK2, LK3, LK4, LK5, LK6, LK7, LK8, LK9, LK10, LK11, LK12, LK13, LK14, LK15, LK16, LK17, if digital signals are used. More Gigabit Ethernet switches, more network nodes, and more fixed communication links are not shown for simplification.

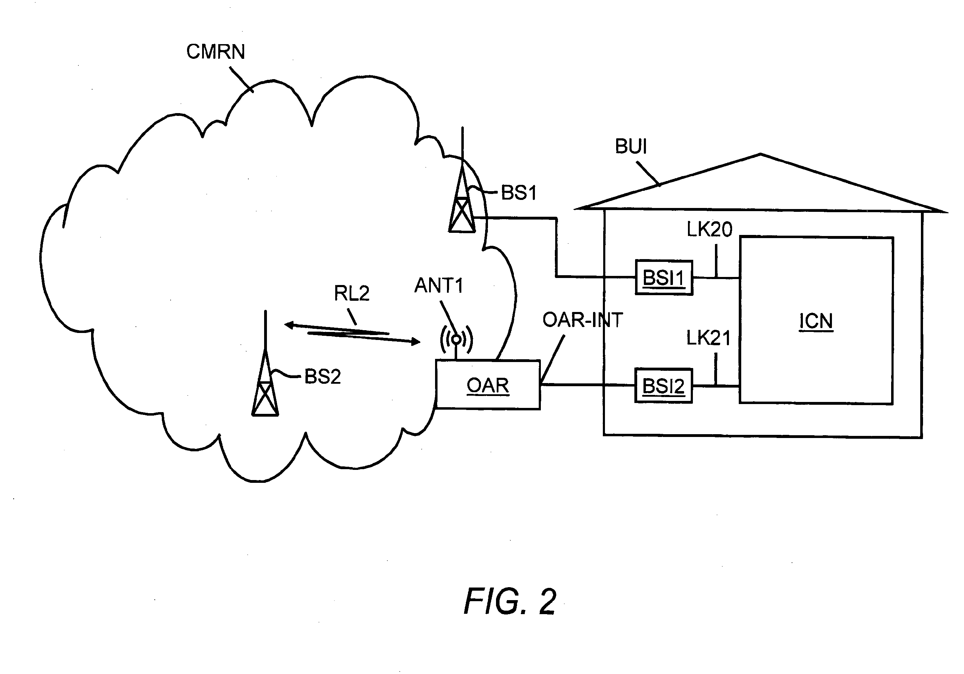

The Gigabit Ethernet switches may be exchanged by OADMs (OADM = optical add drop multiplexer) with connected fibres or by direct fibre links between the remote units and for example a base station interface (see Figure 2), if optical signals are used.

The Gigabit Ethernet switches may be exchanged by direct cable links between the remote units and for example a base station interface (see Figure 2), if electrical signals are used.

The indoor communication network ICN may comprise remote units RU1, RU2, RU3, RU4. The remote units RU1, ..., RU4 may comprise one or several wireless interfaces preferably with RF amplifiers, may comprise one or several wireline interfaces or interfaces for optical fibres, and may be distributed for example across floors FL1, FL2, FL3, FL4, across rooms, across tunnel sections, or across exhibition halls of the building BUI.

The remote units RU1, ..., RU4 may be for example access points of a wireless local area network according to one or several standards of the IEEE 802.1 standard family (e.g. IEEE 802.11 a, IEEE 802.11 g).

A mobile station MS may be connected to the indoor communication network ICN via a radio link RL1 between the remote unit RU1 and the mobile station MS.

More mobile stations and more radio links are not shown for simplification.

The indoor communication network ICN may further comprise one or several analogue-to-digital converters ADC. The one or several analogue-to-digital converters ADC may be adapted for converting an analogue uplink signal into a digital uplink signal of a communication link between the mobile station MS and a server or a user terminal of for example the indoor communication network ICN, a cellular mobile radio network, or a PSTN.

The one or several analogue-to-digital converters ADC may be further adapted for counting occupied bits of the digital uplink signal as a measure of an uplink power level of the communication link.

The indoor communication network ICN may further comprise one or several computers COM. The one or several computers COM may be for example workstations, notebooks, or servers.

The indoor communication network ICN may further comprise one or several landline telephones TEL. The one or several landline telephones TEL may be for example IP telephones, ISDN telephones, or analogue telephones.

The indoor communication network ICN may further comprise one or several motion detectors MD and/or one or several video cameras CAM for monitoring movement events of persons PER1, PER2.

The indoor communication network ICN may further comprise one or several network servers NS. The one or several network servers NS may be adapted for storing and comprising identifiers of locations of the network nodes RU1, ..., RU4, ADC, COM, TEL, MD, CAM and preferably time stamps for interactions of the persons PER1, PER2 at the network nodes RU1, ..., RU4, ADC, COM, TEL, MD, CAM.

The indoor communication network ICN may further comprise a network management system NMS for configuring and controlling network nodes of the indoor communication network ICN. Preferably, the network management system NMS may be located near an entrance ENT of the building BUI.

The indoor communication network ICN may further comprise one or several surveillance network nodes SNN for starting and managing/controlling a method for locating one or several of the network nodes RU1, ..., RU4, ADC, COM, TEL, MD, CAM of the indoor communication network ICN. Alternatively, the network management system NMS may perform the functions according to the embodiments of the invention and may be used for the starting and the managing/controlling of the localization method.

The one or several surveillance network nodes SNN may comprise for example a start button for starting the localization method, may comprise for example a display, a printer, a loudspeaker for presenting the locations of the one or several of the network nodes RU1, ..., RU4, ADC, COM, TEL, MD, CAM, and preferably a radio interface for transmitting/forwarding the indentifiers of the locations of the network nodes RU1, ..., RU4, ADC, COM, TEL, MD, CAM or one or several descriptions of the locations of the network nodes RU1, ..., RU4, ADC, COM, TEL, MD, CAM to a portable device such as a GPS capable mobile station, a walkie-talkie, a PDA, or a notebook.

The locations may be presented for example as crosses or circles in a schematic diagram of a room plan of the building.

The one or several descriptions may be for example a number of a room of the building BUI, a number of a hall of the building BUI, a number of a floor of the building BUI, a description of a subarea of the building BUI such as stairway area of the second floor.

The radio interface may be for example a WLAN interface using a radio access technology such as IEEE 802.11a, a Bluetooth interface, or an infrared interface using a communications protocol standard such as IrDA (IrDA = Infrared Data Association).

The one or several surveillance network nodes SNN may be preferably located near the entrance ENT inside or outside the building BUI. In further alternatives, the one or several surveillance network nodes SNN may be located at an exterior wall of the building BUI, at an access road of the building BUI, in an adjacent building or at a residence of a rescue team such as a police station, a fire station, or a hospital.

The surveillance network nodes SNN may be adapted for transmitting a request preferably as a broadcast or a multicast to all or a group of the network nodes RU1, ..., RU4, ADC, COM, TEL, MD, CAM, NS for locating one or several of the network nodes RU1, ..., RU4, COM, TEL, MD, CAM of the indoor communication network ICN.

The network nodes RU1, ..., RU4, ADC, COM, TEL, MD, CAM, NS may be adapted to comprise one or several identifiers used for locating the network nodes RU1, ..., RU4, ADC, COM, TEL, MD, CAM, NS.

The one or several identifiers may be for example MAC addresses (MAC = Media Access Control), IP addresses (IP = Internet Protocol), or coordinates of a satellite based or ground based positioning system, which may be stored for example on a storage unit or on an Ethernet interface of the network nodes RU1, ..., RU4, ADC, COM, TEL, MD, CAM, NS.

The network nodes RU1, ..., RU4, ADC, COM, TEL, MD, CAM, NS may be adapted for transmitting one or several responses for the request to the surveillance network node SNN. The one or several responses comprise the one or several identifiers of the one or several locations of the network nodes RU1, ..., RU4, ADC, COM, TEL, MD, CAM. The surveillance network node SNN may be adapted to deduce locations such as room numbers or floor numbers of the building BUI from the identifiers of the locations of the network nodes RU1, ..., RU4, ADC, COM, TEL, MD, CAM.

Preferably, the one or several responses will be transmitted, if one or several interactions of one or several of the persons PER1, PER2 are observed at a point of time of receiving the request or if one or several interactions of the one or several of the persons PER1, PER2 have been observed preferably within a predefined time frame with the one or several of the network nodes RU1, ..., RU4, ADC, COM, TEL, MD, CAM.

The one or several interactions may be for example interactions such as transferring, storing or loading files to/on/from a server of the indoor communication network ICN or transferring, storing or loading files to/on/from a server of the Internet or browsing on webpages of the Internet or on webpages of an intranet using for example a user terminal such as the computer COM or the mobile station MS, causing movement events by moving in a room or a floor, or performing a telephone call using the telephone TEL or the mobile station MS.

In an alternative, the network server NS may be adapted for transmitting one or several responses for the request to the surveillance network node SNN and the one or several responses comprise one or several identifier of one or several locations of the network nodes RU1, ..., RU4, ADC, COM, TEL, MD, CAM and preferably comprise time stamps of the one or several interactions. The network server NS may be adapted to store the identifiers of the locations of the network nodes RU1, ..., RU4, ADC, COM, TEL, MD, CAM preferably with time stamps for monitored/observed interactions of the one or several of the persons PER1, PER2. The network nodes RU1, ..., RU4, ADC, COM, TEL, MD, CAM may be adapted to transmit messages preferably with time stamps for the monitored/observed interactions of the one or several of the persons PER1, PER2 to the network server NS.

Alternatively, the network nodes RU1, ..., RU4, ADC, COM, MD, TEL, CAM, NS are adapted for transmitting periodically indications or notifications to the surveillance network node SNN, if the one or several interactions of the one or several of the persons PER1, PER2 have been observed with the one or several of the network nodes RU1, ..., RU4, ADC, COM, TEL, MD, CAM within a predefined period of time. In that case, a broadcasted request or a multicasted request is not required.

Figure 2 shows schematically a block diagram of the building BUI with the indoor communication network ICN and a cellular mobile radio network CMRN according to a second embodiment of the invention.

The cellular mobile radio network CMRN may be for example a GSM/GPRS network (GSM = Global System for Mobile Communication, GPRS = General Packet Radio Service), a UMTS/HSPA network (UMTS = Universal Mobile Telecommunication Systems, HSPA = High Speed Packet Access), a W-CDMA network (W-CDMA = Wideband Code Division Multiple Access), or an LTE network (LTE = Long Term Evolution).

The cellular mobile radio network CMRN may comprise a first base station BS1, a second base station BS2, and an off-air repeater OAR.

The first base station BS1 and/or the second base station BS2 may be located outside or inside the building BUI.

The off-air repeater OAR may be used, because of a large distance between locations of the second base station BS2 and a second base station interface BSI2.

The second base station interface BSI2 and a first base station interface BSI1 may be used, if data are transmitted via the indoor communication network ICN as digital data. The base station interfaces BSI1, BSI2 are adapted to digitize analogue downlink RF signals (RF = radio frequency) and are adapted to insert the digitized downlink RF signals into downlink data packets. In an uplink direction from the remote units RU1, ..., RU4 to the base stations BS1, BS2, the base station interfaces BSI1, BSI2 are adapted to extract digitized uplink RF signals from uplink data packets and are adapted to convert the digitized uplink RF signals into analogue uplink RF signals.

The remote units RU1, ..., RU4 are adapted to extract the digitized downlink RF signals from the downlink data packets and to convert the digitized downlink RF signals into the analogue downlink RF signals. In the uplink direction, the remote units RU1, ..., RU4 are adapted to digitize the analogue uplink RF signals and are adapted to insert the digitized uplink RF signals into the uplink data packets.

If data are transmitted via the indoor communication network ICN as analogue or digital optical data, the base station interfaces BS1, BSI2 may be replaced by master units. The master units are adapted to convert the analogue downlink RF signals into optical downlink signals in the downlink direction from the base stations BS1, BS2 to the remote units RU1, ..., RU4. In an uplink direction from the remote units RU1, ..., RU4 to the base stations BS1, BS2, the master units are adapted to convert optical uplink signals into the analogue uplink RF signals. Accordingly, the remote units RU1, ..., RU4 are adapted to convert the optical downlink signals into the analogue downlink RF signals and are adapted to convert the analogue uplink RF signals into the optical uplink signals.

Further base stations, further off-air repeaters, and further network nodes of the cellular mobile radio network CMRN are not shown for simplification.

The cellular mobile radio network CMRN may be connected to the Internet, to one or several PSTNs (PSTN = Public Switched Telephone Network), or to one or several further cellular mobile radio networks.

The first base station BS1 is connected via the first base station interface BSI1 to the indoor communication network ICN.

The off-air repeater OAR may comprise a first antenna ANT1 for connecting the off-air repeater OAR via a radio link RL2 to the second base station BS2.

The off-air repeater OAR may comprise an interface OAR-INT for connecting the off-air repeater OAR via a second base station interface network node BSI2 to the indoor communication network ICN.

The remote units RU1, ..., RU4 of the indoor communication network ICN may be remote radio heads and may be connected via the base station interfaces BSI1, BSI2 and the off-air repeater OAR to the base stations BS1, BS2 of the cellular mobile radio network CMRN.

The base station interfaces BSI1, BSI2 may be separate network nodes as shown in Figure 2 or may be for example integral parts of the first base station BS1 , of the off-air repeater OAR, or of a network node of the indoor communication network ICN.

Radio sectors of the base stations BS1, BS2 may serve distinct or overlapping regions of the building BUI such as the floors FL1, ..., FL4 or wings of the building BUI.

Communication links LK20, LK21 between the base station interfaces BSI1, BSI2 and one or several of the Gigabit Ethernet switches GES1, ..., GES6 of the indoor communication network ICN may be based on Ethernet, Token Ring, Token Bus, or G.hn.

The communication links LK20, LK21 may use optical fibres or a twisted pair cabling such as based on a CAT5 cable (CAT5 = Category 5) as the transport medium.

The network management system NMS may be used for configuring one or several VLANs (VLAN = Virtual Local Area Network). The one or several VLANs are used for establishing a cell sectorisation within the building BUI by allocating for example the remote units RU1, RU2 to a sector of the first base station BS1 and the remote units RU3, RU4 to a further sector of the second base station BS2.

The base station interfaces BS1, BS2 may be further adapted for comprising the one or several identifier of the one or several locations of the network nodes RU1, ..., RU4, for receiving the broadcasted or the multi-casted requested for locating the network nodes RU1, ..., RU4, and for transmitting the response for the request comprising the one or several identifier or the one or several descriptions of the one or several locations of the network nodes RU1, ..., RU4.

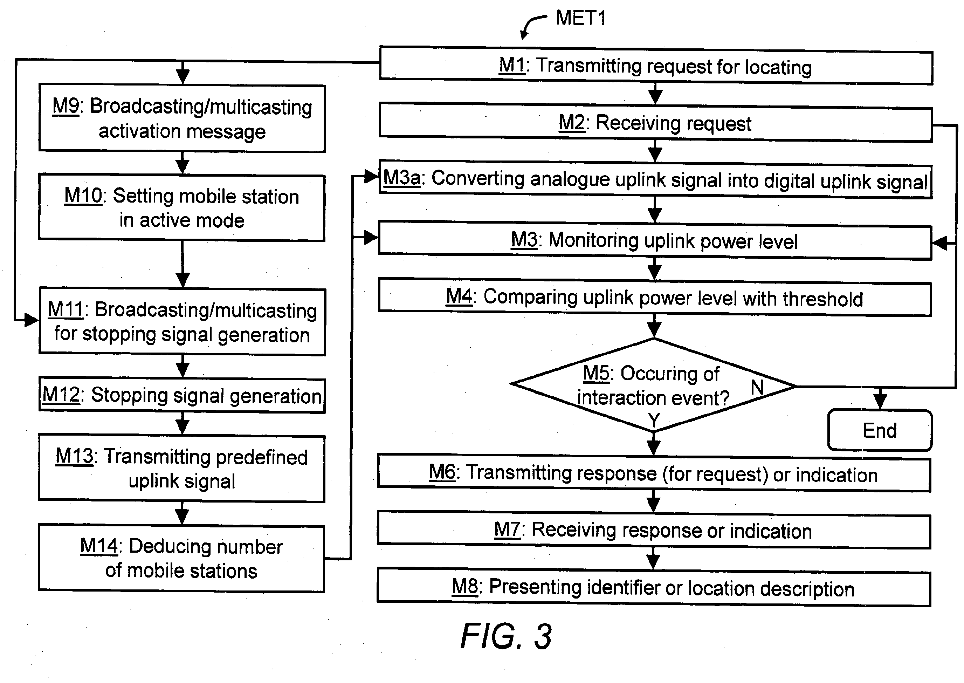

Figure 3 shows schematically a block diagram of a method MET1 for locating network nodes according to the first embodiment, the second embodiment, and further embodiments of the invention.

The sequence and the number of the steps for performing the method MET1 is not critical, and as can be understood by those skilled in the art, that the sequence and the number of the steps may vary without departing from the scope of the invention, e.g. some of the steps may be performed simultaneously, some of the steps may be alternative steps, or some of the steps may be ignored.

In a first step M1, a request for locating one or several first network nodes MS, MD, CAM, TEL, COM of the indoor communication network ICN may be transmitted preferably as a broadcast or a multicast from a second network node SNN, NMS of the indoor communication network ICN to the one or several first network nodes MD, CAM, TEL, COM and/or to one or several third network nodes RU1, ..., RU4, ADC, GES1, ..., GES6, BSI1, BSI2, NS of the indoor communication network ICN.

The one or the several first network nodes may be for example the mobile station MS, the computer COM, the motion detector MD, the video camera CAM, or the landline telephone TEL.

The second network node may be for example the network management system NMS or the surveillance network node SNN.

The one or the several third network nodes may be for example the remote units RU1, ..., RU4, the Gigabit Ethernet switches GES1, ..., GES6, the analogue-to-digital converter ADC, or the base station interfaces BSI1, BSI2.

It is not required, that the request contains an identifier of a receiving network node of the indoor communication network ICN.

The multicast may be preferred to limit receivers of the request to network nodes, which are adapted to monitor one or several interactions of the one or several persons PER1, PER2 with the indoor communication network ICN.

The first step M1 may be triggered for example manually or automatically by an emergency call coming from one of the network nodes of the indoor communication network ICN, manually by pressing the button on a GUI (GUI = graphical user interface) of the surveillance network node SNN by a member of a rescue team, or automatically by an alarm of a smoke detector of the building BUI.

In a further step M2, the one or the several first network nodes and/or the one or several third network nodes may receive the request for locating the one or the several first network nodes.

In a next step M3, the one or the several third network nodes monitor an uplink power level of one or several communication links of one or several user terminals.

If analogue optical or electrical signals may be used in the indoor communication network ICN, the one or the several third network nodes may be the remote units RU1, ..., RU4, because a best resolution of the location of the mobile station MS can be obtained in this case at the remote units RU1, ..., RU4.

If digital optical or electrical signals may be used in the indoor communication network ICN, the one or the several third network nodes may be the remote units RU1, ..., RU4, the Gigabit Ethernet switches GES1, ..., GES6, the analogue-to-digital converter ADC, the base station interfaces BSI1, BSI2, or the master units. In this case, the location of the mobile station MS may be obtained for example from the MAC address of an Ethernet frame of a remote unit RU1, ..., RU4 transmitted from the remote unit RU 1, ..., RU4 to one of the base station interfaces BSI1, BSI2 or from a wavelength of an optical signal transmitted from the remote unit RU1, ..., RU4 to one of the master units.

The step M3 may be triggered for example by the step M2 or may be triggered periodically by a periodic trigger with a predefined time period at the one or the several first network nodes and/or at the one or the several third network nodes. The predefined time period may be adapted to processing load of the one or the several first network nodes and/or the one or the several third network nodes, to transmission capacity on the communication links LK1, ..., LK13, or to requirements of a rapidness of the location method. Due to the alternative with a period trigger, the steps M1 and M2 may be not used.

The monitoring of the uplink power level of electrical or optical signals may be executed for example by using one or several RF couplers or optical couplers in an uplink direction of the one or the several communication links LK1, LK2, LK3, LK5, LK6, LK8, LK10, LK11, LK12, LK14, LK15, LK16, LK17. The RF couplers and the optical couplers may be located preferably at the remote units. The one or several RF couplers or optical couplers may be connected to one or several electrical or optical power detectors for monitoring a part of the uplink power level.

In an alternative, a further step M3a may be executed prior to the step M3. In the further step M3a, the analogue-to-digital converter ADC of the indoor communication system ICN may be used to convert one or several analogue electrical RF uplink signals into digital uplink signals. In the following step M3, the analogue-to-digital converter may be used to count occupied bits of the digital uplink signal as a measure of the uplink power level.

In a further step M4, the one or the several third network nodes may compare the uplink power level with a predefined power threshold. The predefined power threshold may be adapted for example to or above an average or a peak noise level of the uplink of the communication links LK1, LK2, LK3, LK5, LK6, LK8, LK10, LK11, LK12, LK14, LK15, LK16, LK17.

In a next step M5, the one or the several third network nodes may verify, whether an interaction event is occurring currently at the one or the several first network nodes within the indoor communication network ICN.

The interaction event may be for example the uplink power level equalling or exceeding the predefined threshold. This is a hint for one or several users of the indoor communication currently performing an interaction such as a telephone call, an Internet session or a file transfer with uplink traffic.

If no interaction event is occurring, the method MET1 may end until a further request is being received or the step M3 may be a next step in case of using for example the period trigger.

If an interaction event is occurring, step M6 may be a further step.

In the further step M6, the one or the several third network nodes may transmit one or several responses to the second network node for the request comprising the one or several identifiers of the one or several locations of the one or the several first network nodes.

In an alternative, one or several indications or notifications for example triggered by the period trigger may be transmitted from the one or the several third network nodes to the second network node.

If the third network node may be for example the Gigabit Ethernet switches GES1, GES2, GES3, GES6 or the base station interfaces BSI1, BSI2, the MAC address or IP address of one of the remote unit's RU1, ..., RU4 may be used for example as the identifier of the location of one or the several first network nodes MS.

In a next step M7, the one or the several responses or the one or the several indications or notifications may be received at the second network node SNN, NMS.

In a further step M8, the second network node SNN, NMS presents the one or the several locations of the one or the several first network nodes MS, TEL, COM. The one or the several locations may be presented by the one or the several descriptions of the one or the several locations. Therefore, the second network node SNN, NMS may deduce for example by using a mapping table from the one or the several identifiers the one or the several descriptions of the one or several locations such as numbers of rooms of the building BUI, numbers of halls of the building BUI, numbers of floors of the building BUI, or descriptions of subareas of the building BUI.

The presenting of the one or several identifiers of the one or several locations may be performed for example by showing the one or several locations together with a room layout of the building BUI on the display of the second network node SNN, NMS or on a sheet of paper printed by the printer of the second network node SNN, NMS or by communicating the one or several locations via a computer voice and the loudspeaker of the second network node SNN, NMS.

In an optional step M9, the second network node SNN, NMS may broadcast or multicast an activation message to the mobile station MS. The optional step M9 may be performed for example after the step M1, in parallel to the step M1, or may be performed independently from the step M1.

The activation message may be for example similar to a paging call in the cellular mobile radio network CMRN. The paging call is used to locate and awake a mobile station, if the mobile station is idle and there is for example an incoming call for the mobile station.

In a further optional step M10 after the step M9, the mobile station MS is set in an active mode by the activation message. In the active mode, the mobile station MS for example may receive periodically requests from the second network node SNN, NMS such as ARP requests (ARP = Address Resolution Protocol) and responds periodically to the ARP requests. In an alternative, the mobile station MS may transmit periodically messages with arbitrary information to the second network node SNN, NMS without periodic requests from the second network node SNN, NMS.

In a next optional step M11, the second network node SNN, NMS or a network node of the cellular mobile radio network CMRN such as the base station BS1, BS2 may broadcast or multicast a message to the one or the several mobile stations MS for stopping uplink signal generation of the one or several communication links (the one or several radio links RL). The step M11 may be performed for example in parallel to the step M1, after the step M1, or after the step M10.

In a further optional step M12 after the step M11, the one or the several mobile stations MS may stop the uplink signal generation of the one or several communication links.

In a next optional step M13 after the step M12, the one or the several mobile stations MS may transmit a predefined uplink signal to the second network node SNN, NMS or to the network node of the cellular mobile radio network. The predefined uplink signal may be preferably a signal with a temporally constant uplink power level by transmitting for example a temporally constant audio signal.

In a further optional step M14 after the step M13, the third network node RU1, ..., RU4, ADC, GES1, GES2, GES3, BSI1, BSI2 may deduce from the monitored uplink power level of the predefined uplink signal a number of the one or the several mobile stations MS.

The steps M3a or M3 may be next steps after the step M14.

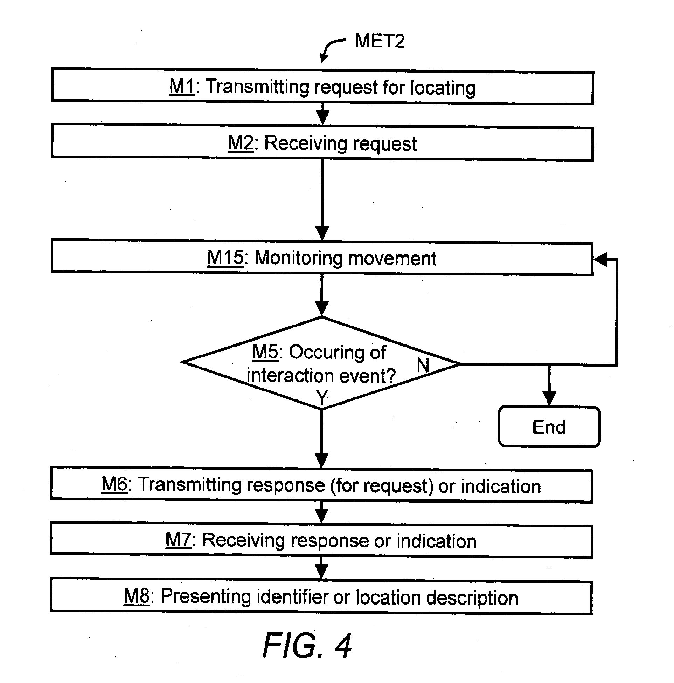

Figure 4 shows schematically a block diagram of a method MET2 for locating network nodes according to an even further embodiment of the invention. The elements in Figure 4 that correspond to elements of Figure 3 have been designated by same reference numerals.

In addition to the steps M1, M2, M5, M6, M7, M8 of the method MET1, the method MET2 further comprises step M15.

In the first step M1, the request for locating the one or the several first network nodes MD, CAM may be broadcasted or multicasted from the second network node SNN, NMS to the one or the several first network nodes MD, CAM.

The one or the several first network nodes may be for example the motion detector MD or the video camera CAM.

In the further step M2, the one or the several first network nodes MD, CAM may receive the broadcasted or multicasted request for locating the one or the several first network nodes MD, CAM.

In the next step M15, the one or the several first network nodes MD, CAM may monitor movement events of the one or several persons PER1, PER2 being located within the building BUI.

Preferably, the video camera CAM or a further network node of the indoor communication network such as the surveillance network node SNN may comprise an image evaluation computer program product, which is able to detect movements automatically for example by comparing subsequent recorded images of the video camera CAM.

In the next step M5, the one or the several first network nodes MD, CAM may verify, whether an interaction event such as the movement event is occurring at the one or the several first network nodes MD, CAM.

In the further step M6, the one or the several first network nodes MD, CAM may transmit one or several responses to the second network node SNN, NMS for the broadcasted or multicasted request with one or several identifiers of the one or several locations of the one or the several first network nodes MD, CAM such as MAC addresses, IP addresses, or the coordinates of the satellite based or ground based positioning system.

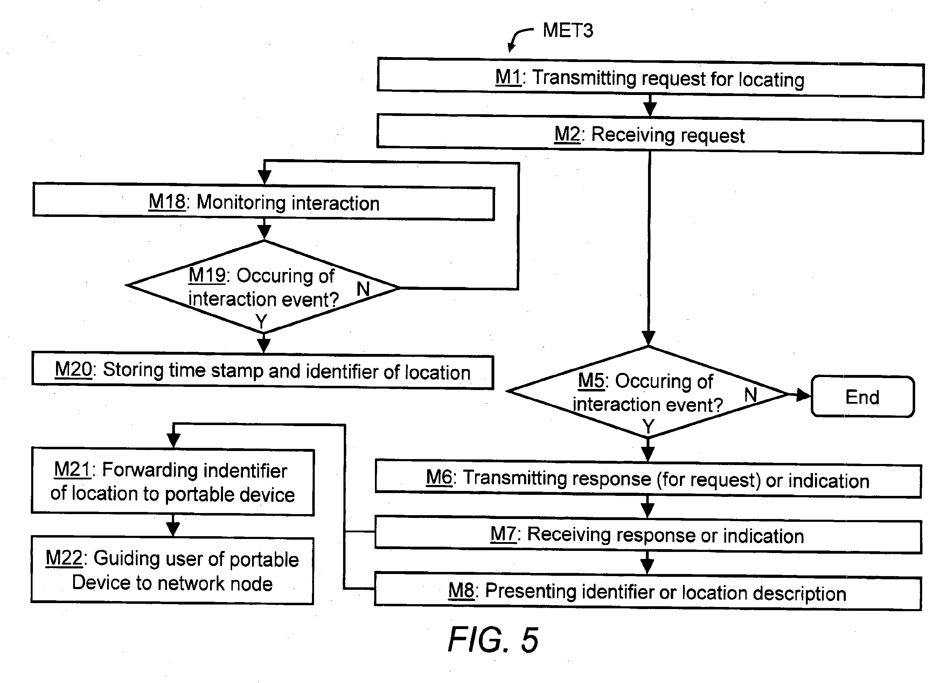

Figure 5 shows schematically a block diagram of a method MET3 for locating network nodes according to a further preferred embodiment of the invention. The elements in Figure 5 that correspond to elements of Figure 3 or Figure 4 have been designated by same reference numerals.

In addition to the steps M1, M2, M5, M6, M7, M8 of the method MET1 or the method MET2, the method MET3 further comprises steps M18, M19, M20 and/or steps M21, M22.

In the first step M1, the request for locating one or several first network nodes of the indoor communication network ICN may comprise a predefined time frame. The predefined time frame may be for example a time frame of several seconds or minutes.

In the further optional step M18 preferably performed periodically and independently to the steps of the methods MET1, MET2, the one or several first network nodes such as the computer COM, the landline telephone TEL, the motion detector MD, or the video camera CAM and/or the one or several third network nodes such as the remote units RU1, ..., RU4, the Gigabit Ethernet switches GES1, ..., GES6, the base station interfaces BSI1, BSI2, or the network server NS may monitor the one or the several interactions of the one or the several persons PER1, PER2 at the one or the several first network nodes COM, TEL, MD, CAM, MS.

The one or the several interactions may be for example storing one or several electronic files on a server by using the computer COM, transferring electronic files between directories by using the computer COM, browsing on webpages of the Internet or an intranet by using the computer COM, causing movement events by moving in a room or a floor, or by talking to someone by using the landline telephone TEL or the mobile station MS.

In a next optional step M19, the one or several first network nodes MD, CAM, COM, TEL and/or the one or several third network nodes RU1, ..., RU4, GES1, ..., GES6, ADC, BSI1, BSI2 may verify, whether an interaction event is occurring currently at the one or the several first network nodes MD, CAM, COM, TEL, MS within the indoor communication network ICN.

If no interaction event is occurring, the step M18 may be the next step.

If an interaction event is occurring, step M20 may be a further step.

In the next optional step M20 after the step M19, the one or the several third network nodes RU1, ..., RU4, GES1, ..., GES6, ADC, BSI1, BSI2, NS may store the one or several time stamps and the one or several identifiers of the one or the several locations of the one or the several first network nodes MS, MD, CAM, COM, TEL, for the one or the several interactions.

Preferably, the one or several time stamps and the one or several identifiers may be stored at the separate network server NS. Therefore,
the one or several first network nodes MD, CAM, COM, TEL or the one or several third network nodes RU1, ..., RU4, ADC, GES1, ..., GES6, BSI1, BSI2 may transmit one or several event messages to the network server NS. The one or several event messages may comprise time stamps of the one or several interactions of the one or the several persons PER1, PER2 at the one or the several first network nodes MS, MD, CAM, COM, TEL and may comprise the one or several identifiers of the one or several locations of the one or several first network nodes MS, MD, CAM, COM, TEL.

In the next step M5, the one or the several third network nodes RU1, ..., RU4, ADC, GES1, ..., GES6, BSI1, BSI2, NS and/or the first network nodes MD, CAM, COM, TEL may verify, whether an interaction event such as a movement event has been occurred within the predefined time frame at the one or the several first network nodes MS, MD, CAM, COM, TEL. The predefined time frame extends from the point of time of receiving the request or a period trigger to a point of time in the past.

In the further step M6, the one or several first network nodes MD, CAM, COM, TEL and/or the one or several third network nodes RU1, ..., RU4, ADC, GES1, ..., GES6, BSI1, BSI2, NS may transmit the one or several responses to the second network node for the broadcasted or multicasted request for interactions having a time stamp within the predefined time interval.

In the further optional step M21 preferably after the step M7 or after the step M8, the second network node SNN, NMS may forward the one or the several identifiers of the one or several locations or the one or the several location descriptions of the one or several locations to the portable device. The portable device may be owned for example by a member of a rescue team or may be located for example at the surveillance network node SNN for cases of emergency.

In the next optional step M22 after the step M21, a user of the portable device such as the member of the rescue team is guided to the one or the several locations of the one or the several first network nodes.

The guiding may be provided for example by transmitting specific beacon signals from specific radio remote heads, receiving the specific beacon signals at the portable device, and comparing the specific beacon signals with a map of a building stored at the portable device. In an alternative, the guiding may be provided by GPS signals, if the GPS signals can be received within the building BUI.

The methods MET1, MET2, MET3 may be executed individually or in arbitrary combination dependent on the types and capabilities of the first network nodes MS, MD, CAM, COM, TEL, the second network node SNN, NMS, and the third network nodes RU1, ..., RU4, ADC, GES1, ..., GES6, BSI1, BSI2, NS.

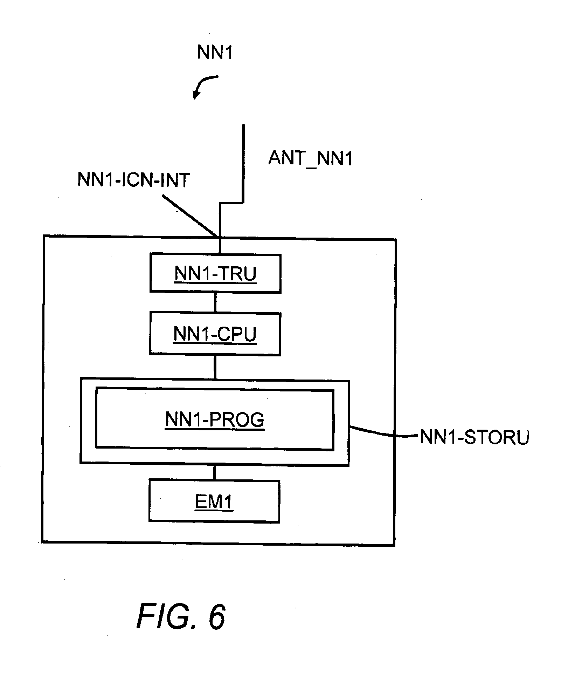

Referring to Figure 6 the first network node NN1 may comprise an interface NN1-ICN-INT for connecting the first network node NN1 to the indoor communication network ICN, a transceiver unit NN1-TRU connected to the interface NN1-ICN-INT, a CPU (CPU = central processing unit) NN1-CPU, a computer readable storage unit NN1-STORU.

If the first network node NN1 is the mobile station MS, the first network node NN1 further comprises an antenna ANT-NN1 connected to the interface NN1-ICN-INT.

If the first network node NN1 is the motion detector MD, the video camera CAM, the computer COM, or the landline telephone TEL, the first network node NN1 further comprises an event monitor EM1 for monitoring the movements of one of the persons PER1, PER2 in the building BUI or for monitoring interactions of one of the persons PER1, PER2 as users of the user terminal COM, TEL.

The transceiver unit NN1-TRU is adapted to receive the request for locating the first network node NN1, if the first network node NN1 is the motion detector MD, the video camera CAM, the computer COM, or the landline telephone TEL and is adapted to transmit one or several responses for the request comprising the identifier of the first network node NN1. The transceiver unit NN1-TRU may store the identifier of the location of the first network node NN1.

The computer readable storage unit NN1-STORU is foreseen for storing a computer readable program NN1-PROG and preferably the identifier of the location of the first network node NN1.

The identifier such as an IP address can be configured locally during initial operation or can be remotely configured for example by a network element such as a DHCP server.

The computer readable program NN1-PROG is foreseen for executing the steps of the methods MET1, MET2, and/or MET3.

In particular, the computer readable program NN 1-PROG comprises means for verifying, whether an interaction event is occurring or has been occurred within the predefined time frame at the first network node NN1, if the first network node NN1 is the motion detector MD, the video camera CAM, the computer COM, or the landline telephone TEL.

The CPU NN1-CPU is foreseen for executing the computer readable program NN1-PROG.

The event monitor EM1 may be for example an input monitoring unit in the computer COM or the landline telephone TEL for monitoring entries or inputs via input devices such as a keyboard or a mouse or for monitoring uplink traffic from the first network node NN1, a motion sensor in the motion detector MD, or the image evaluation computer program product in the video camera CAM, which is able to detect movements automatically for example by comparing subsequent recorded images of the video camera CAM.

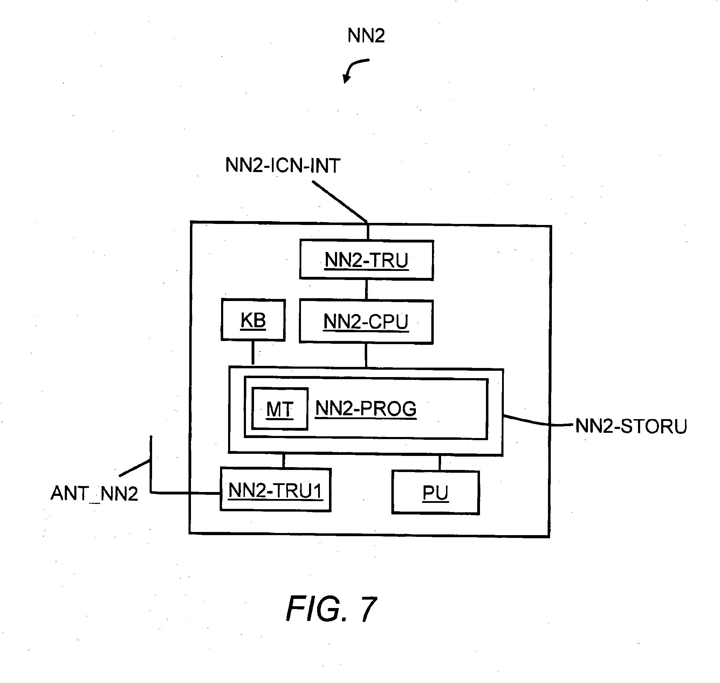

Referring to Figure 7 the first network node NN2 may comprise an interface NN2-ICN-INT for connecting the second network node NN2 to the indoor communication network ICN, a transceiver unit NN2-TRU connected to the interface NN2-ICN-INT, a CPU NN2-CPU, a computer readable storage unit NN2-STORU, a presentation unit PU, preferably a further transceiver or transmitter unit NN2-TRU1, preferably an antenna ANT_NN2, and preferably a keyboard KB.

The second network node NN2 may be for example the surveillance network node SNN or the network management system NMS.

The transceiver unit NN2-TRU is adapted to transmit the request for locating the one or the several first network nodes NN1 and is adapted to receive one or several responses comprising the one or the several identifiers of the one or several locations of the one or several first network nodes NN1.

The computer readable storage unit NN2-STORU is foreseen for storing a computer readable program NN2-PROG and preferably the mapping table MT with mappings between the one or the several identifiers of the one or several locations of the one or several first network nodes NN1 such as IP addresses and the one or the several descriptions of the one or several locations of the one or several first network nodes NN1 such as room numbers or floor numbers.

The computer readable program NN2-PROG is foreseen for executing respective steps of the methods MET1, MET2, and/or MET3.

The CPU NN2-CPU is foreseen for executing the computer readable program NN2-PROG.

The presentation unit PU may be for example a GUI such as a display for showing the one or the several locations of the one or the several first network nodes NN1 by using the one or several identifiers of the one or several first network nodes NN1 or the one or several descriptions of the one or several locations of the one or several first network nodes NN1, a printer for printing the one or the several descriptions of the one or several locations of the one or the several first network nodes NN1 on a sheet of paper, or a loadspeaker for announcing the one or the several locations of the one or the several first network nodes NN1.

The keyboard KB may be used for triggering the location methods MET1, MET2, MET3 for example in case of emergency. Alternatively, a single button may be used for triggering the location methods MET1, MET2, MET3.

The further transceiver or transmitter unit NN2-TRU1 and the antenna ANT_NN2 may be used to forward the one or the several identifiers or the one or the several descriptions of the one or the several locations to the portable device. In an alternative, a cable or fibre connection may be used instead of the antenna ANT for the forwarding between the second network node NN2 and the portable device.

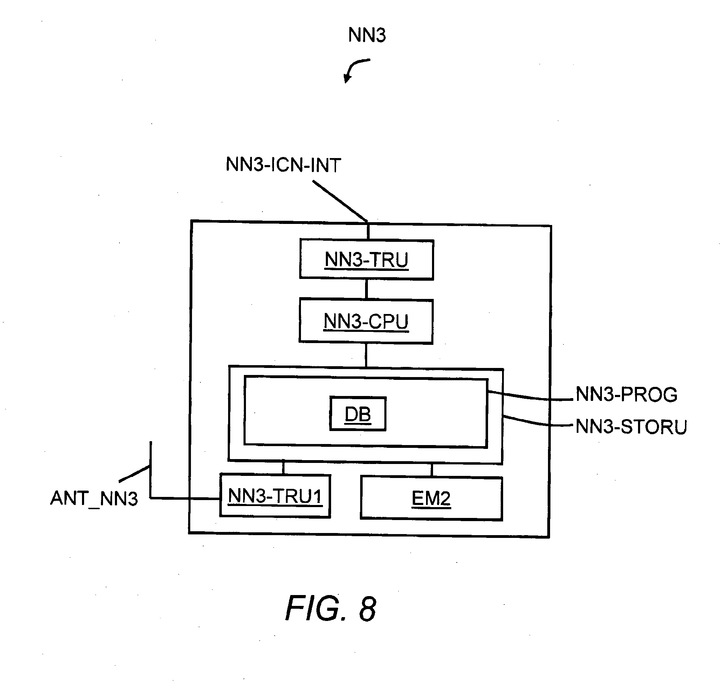

Referring to Figure 8, the third network node NN3 may comprise an interface NN3-ICN-INT for connecting the third network node NN3 to the indoor communication network ICN, a transceiver unit NN3-TRU connected to the interface NN3-ICN-INT, a CPU (CPU = central processing unit) NN3-CPU, a computer readable storage unit NN3-STORU.

If the third network node NN3 may be the remote unit RU1, ... RU4, the third network node NN3 may further comprise an antenna ANT_NN3 and a transceiver NN3-TRU1 connected to the antenna ANT NN3.

If the third network node NN3 may be the remote unit RU1, ..., RU4, the Gigabit Ethernet switch GES1, ..., GES6, the analogue-to-digital converter ADC, the base station interface BSI1, BSI2, the third network node NN3 may further comprise an event monitor EM3.

The transceiver unit NN3-TRU is adapted to receive the request for locating the one or the several first network nodes NN1 and is adapted to transmit one or several responses for the request comprising the one or several identifiers of the one or several locations of the one or several first network nodes NN1.

The computer readable storage unit NN3-STORU is foreseen for storing a computer readable program NN3-PROG and may comprise optionally a database DB for storing and comprising the one or the several identifiers and preferably for storing and comprising the one or the several time stamps of the one or the several interactions of the one or the several persons PER1, PER2 with the one or the several first network nodes NN1.

The computer readable program NN3-PROG is foreseen for executing respective steps of the methods MET1, MET2, and/or MET3.

In particular, the computer readable program NN3-PROG comprises means for verifying, whether an interaction event is occurring or has been occurred within the predefined time frame at the one or the several first network nodes NN 1.

The CPU NN3-CPU is foreseen for executing the computer readable program NN3-PROG.

If the third network node NN3 is for example one of the base station interfaces BSI1, BSI2, one of the Gigabit Ethernet switches GES1, ..., GES6, one of the remote units RU1, ..., RU4, the event monitor EM2 may be for example the electrical or optical coupler and the electrical or optical power detector for monitoring the uplink power level of the communication link of the user terminal MS, TEL, the analogue-to-digital converter ADC for counting the bits of the digital signal as the measure of the uplink power level, or a packet sniffer or packet analyzer for sniffing or analyzing transmitter addresses of uplink packets transmitted via the communication links LK1, ..., LK17, LK20, LK21 of the indoor communication network ICN.

## Claims

1. A mobile station (NN1, MS) for locating said mobile station (NN1, MS) in an indoor communication network (ICN) connected to a cellular mobile radio network (CMRN) via a network node (BS1) of said cellular mobile radio network (CMRN) and via a base station interface (BSI1), said mobile station (NN1, MS) comprising:
- means (ANT_NN1, NN1-TRU) for receiving a broadcast or multicast message from a network node (NN2, NMS, SNN) of said indoor communication network (ICN) for stopping uplink signal generation of at least one communication link (RL1) of said mobile station (MS),
- means (NN1-CPU, NN1-PROG) for stopping said uplink signal generation for said at least one communication link (RL1), and
- means (ANT_NN1, NN1-TRU) for transmitting a predefined uplink signal with a temporally constant uplink power level to said network node (NN2, NMS, SNN) of said indoor communication network (ICN) or to said network node (BS1) of said cellular mobile radio network (CMRN).

2. Mobile station (NN1, MS) according to claim 1, wherein said predefined uplink signal is transmitted to said network node (SNN, NMS) of said indoor communication network (ICN) or to said network node (BS1) of said cellular mobile radio network (CMRN).

3. Mobile station (NN1, MS) according to any of the preceding claims, wherein said predefined uplink signal is a temporally constant audio signal.

4. Mobile station (NN1, MS) according to any of the preceding claims, wherein said mobile station (NN1, MS) further comprises:
- means (ANT_NN1, NN1-TRU) for receiving an activation message broadcasted or multicasted from said network node (NN2, NMS, SNN) of said indoor communication network (ICN) for setting said mobile stations (NN1, MS) in an active mode, and
- means (NN1-CPU, NN1-PROG) for setting said mobile stations (NN1, MS) in said active mode by said activation message.

5. Mobile station (NN1, MS) according to claim 4, wherein said mobile station (NN1, MS) further comprises:
- means (ANT_NN1, NN1-TRU) for receiving periodically requests from said network node (NN2, SNN, NMS) in said active mode, and
- means (ANT_NN1, NN1-TRU) for responding periodically in said active mode to said requests.

6. Mobile station (NN1, MS) according to claim 5, wherein said requests are address resolution protocol requests.

7. Mobile station (NN1, MS) according to claim 4, wherein said mobile station (NN1, MS) further comprises means (ANT_NN1, NN1-TRU) for transmitting periodically messages with arbitrary information to said network node (NN2, SNN, NMS).

8. A method (MET1) for locating a mobile station (NN1, MS) in an indoor communication network (ICN) connected to a cellular mobile radio network (CMRN) via a network node (BS1) of said cellular mobile radio network (CMRN) and via a base station interface (BSI1), said method (MET1) comprising:
- receiving at said mobile station (NN1, MS) a broadcast or multicast message from a network node (NN2, NMS, SNN) of said indoor communication network (ICN) for stopping uplink signal generation of at least one communication link (RL1) of said mobile station (MS),
- stopping (M12) at said mobile station (MS) said uplink signal generation for said at least one communication link (RL1), and
- transmitting (M13) from said mobile station (MS) to said network node (NN2, NMS, SNN) of said indoor communication network (ICN) or to said network node (BS1, BS2) of said cellular mobile radio network (CMRN) a predefined uplink signal with a temporally constant uplink power level.

## Patentansprüche

1. Mobilstation (NN1, MS) zum Lokalisieren der besagten Mobilstation (NN1, MS) in einem Innenraumkommunikationsnetz (ICN), das mit einem zellularen Mobilfunknetz (CMRN) über einen Netzknoten (BS1) des besagten zellularen Mobilfunknetzes (CMRN) und über eine Basisstationsschnittstelle (BSI1) verbunden ist, wobei die besagte Mobilstation (NN1, MS) Folgendes umfasst:
- Mittel (ANT_NN1, NN1-TRU) zum Empfangen einer Broadcast- oder Multicast-Nachricht von einem Netzknoten (NN2, NMS, SNN) des besagten Innenraumkommunikationsnetzes (ICN) zum Stoppen der Aufwärtsverbindungssignalerzeugung von mindestens einer Kommunikationsverbindung (RL1) der besagten Mobilstation (MS),
- Mittel (NN1-CPU, NN1-PROG) zum Stoppen der besagten Aufwärtsverbindungssignalerzeugung für die besagte mindestens eine Kommunikationsverbindung (RL1), und
- Mittel (ANT_NN1, NN1-TRU) zum Senden eines vorausdefinierten Aufwärtsverbindungssignals mit einem zeitlich konstanten Aufwärtsverbindungsleistungspegel an den besagten Netzknoten (NN2, NMS, SNN) des besagten Innenraumkommunikationsnetzes (ICN) oder an den besagten Netzknoten (BS1) des besagten zellularen Mobilfunknetzes (CMRN).

2. Mobilstation (NN1, MS) nach Anspruch 1, wobei das besagte vorausdefinierte Aufwärtsverbindungssignal an den besagten Netzknoten (SNN, NMS) des besagten Innenraumkommunikationsnetzes (ICN) oder an den besagten Netzknoten (BS1) des besagten zellularen Mobilfunknetzes (CMRN) gesendet wird.

3. Mobilstation (NN1, MS) nach einem beliebigen der vorstehenden Ansprüche, wobei das besagte vorausdefinierte Aufwärtsverbindungssignal ein zeitlich konstantes Audiosignal ist.

4. Mobilstation (NN1, MS) nach einem beliebigen der vorstehenden Ansprüche, wobei die besagte Mobilstation (NN1, MS) weiterhin Folgendes umfasst:
- Mittel (ANT_NN1, NN1-TRU) zum Empfangen einer Aktivierungsnachricht, die von dem besagten Netzknoten (NN2, NMS, SNN) des besagten Innenraumkommunikationsnetzes (ICN) mittels Broadcasting oder Multicasting gesendet wird, um die besagten Mobilstationen (NN1, MS) in einen aktiven Modus zu setzen, und
- Mittel (NN1-CPU, NN1-PROG), um die besagten Mobilstationen (NN1, MS) durch die besagte Aktivierungsnachricht in den besagten aktiven Modus zu setzen.

5. Mobilstation (NN1, MS) nach Anspruch 4, wobei die besagte Mobilstation (NN1, MS) weiterhin Folgendes umfasst:
- Mittel (ANT_NN1, NN1-TRU) zum periodischen Empfangen von Anforderungen von dem besagten Netzknoten (NN2, SNN, NMS) in dem besagten aktiven Modus, und
- Mittel (ANT_NN1, NN1-TRU) zum periodischen Antworten in dem besagten aktiven Modus auf die besagten Anforderungen.

6. Mobilstation (NN1, MS) nach Anspruch 5, wobei die besagten Anforderungen Adressauflösungsprotokoll-Anforderungen sind.

7. Mobilstation (NN1, MS) nach Anspruch 4, wobei die besagte Mobilstation (NN1, MS) weiterhin Mittel (ANT_NN1, NN1-TRU) zum periodischen Senden von Nachrichten mit willkürlichen Informationen an den besagten Netzknoten (NN2, SNN, NMS) umfasst.

8. Verfahren (MET1) zum Lokalisieren einer Mobilstation (NN1, MS) in einem Innenraumkommunikationsnetz (ICN), das mit einem zellularen Mobilfunknetz (CMRN) über einen Netzknoten (BS1) des besagten zellularen Mobilfunknetzes (CMRN) und über eine Basisstationsschnittstelle (BSI1) verbunden ist, wobei das besagte Verfahren (MET1) Folgendes umfasst:
- an der besagten Mobilstation (NN1, MS) das Empfangen einer Broadcast- oder Multicast-Nachricht von einem Netzknoten (NN2, NMS, SNN) des besagten Innenraumkommunikationsnetzes (ICN) zum Stoppen der Aufwärtsverbindungssignalerzeugung von mindestens einer Kommunikationsverbindung (RL1) der besagten Mobilstation (MS),
- an der besagten Mobilstation (MS) das Stoppen (M12) der besagten Aufwärtsverbindungssignalerzeugung für die besagte mindestens eine Kommunikationsverbindung (RL1), und
- von der besagten Mobilstation (MS) das Senden (M13) eines vorausdefinierten Aufwärtsverbindungssignals mit einem zeitlich konstanten Aufwärtsverbindungsleistungspegel an den besagten Netzknoten (NN2, NMS, SNN) des besagten Innenraumkommunikationsnetzes (ICN) oder an den besagten Netzknoten (BS1, BS2) des besagten zellularen Mobilfunknetzes (CMRN).

## Revendications

1. Station mobile (NN1, MS) pour localiser ladite station mobile (NN1, MS) dans un réseau de communication intérieur (ICN) connecté à un réseau radio mobile cellulaire (CMRN) par l'intermédiaire d'un noeud de réseau (BS1) dudit réseau radio mobile cellulaire (CMRN) et par l'intermédiaire d'une interface de station de base (BSI1), ladite station mobile (NN1, MS) comprenant :
- des moyens (ANT_NN1, NN1-TRU) pour recevoir un message de diffusion ou de multidiffusion à partir d'un noeud de réseau (NN2, NMS, SNN) dudit réseau de communication intérieur (ICN) pour arrêter une génération de signaux de liaison montante d'au moins une liaison de communication (RL1) de ladite station mobile (MS),
- des moyens (NN1-CPU, NN1-PROG) pour arrêter ladite génération de signaux de liaison montante pour ladite au moins une liaison de communication (RL1), et
- des moyens (ANT_NN1, NN1-TRU) pour transmettre un signal de liaison montante prédéfini avec un niveau de puissance de liaison montante temporairement constant audit noeud de réseau (NN2, NMS, SNN) dudit réseau de communication intérieur (ICN) ou audit noeud de réseau (BS1) dudit réseau radio mobile cellulaire (CMRN).

2. Station mobile (NN1, MS) selon la revendication 1, dans laquelle ledit signal de liaison montante prédéfini est transmis audit noeud de réseau (SNN, NMS) dudit réseau de communication intérieur (ICN) ou audit noeud de réseau (BS1) dudit réseau radio mobile cellulaire (CMRN).

3. Station mobile (NN1, MS) selon l'une quelconque des revendications précédentes, dans laquelle le signal de liaison montante prédéfini est un signal audio temporairement constant.

4. Station mobile (NN1, MS) selon l'une quelconque des revendications précédentes, ladite station mobile (NN1, MS) comprenant en outre :
- des moyens (ANT_NN1, NN1-TRU) pour recevoir un message d'activation diffusé ou multidiffusé à partir dudit noeud de réseau (NN2, NMS, SNN) dudit réseau de communication intérieur (ICN) pour régler lesdites stations mobiles (NN1, MS) en mode actif, et
- des moyens (NN1-CPU, NN1-PROG) pour régler lesdites stations mobiles (NN1, MS) en mode actif au moyen dudit message d'activation.

5. Station mobile (NN1, MS) selon la revendication 4, ladite station mobile (NN1, MS) comprenant en outre :
- des moyens (ANT_NN1, NN1-TRU) pour recevoir périodiquement des demandes provenant dudit noeud de réseau (NN2, SNN, NMS) dans ledit mode actif, et
- des moyens (ANT_NN1, NN1-TRU) pour répondre périodiquement dans ledit mode actif auxdites demandes.

6. Station mobile (NN1, MS) selon la revendication 5, dans laquelle lesdites demandes sont des demandes de protocole de résolution d'adresse.

7. Station mobile (NN1, MS) selon la revendication 4, ladite station mobile (NN1, MS) comprenant en outre des moyens (ANT_NN1, NN1-TRU) pour transmettre périodiquement des messages avec des informations arbitraires audit noeud de réseau (NN2, SNN, NMS).

8. Procédé (MET1) pour localiser une station mobile (NN1, MS) dans un réseau de communication intérieur (ICN) connecté à un réseau radio mobile cellulaire (CMRN) par l'intermédiaire d'un noeud de réseau (BS1) dudit réseau radio mobile cellulaire (CMRN) et par l'intermédiaire d'une interface de station de base (BSI1), ledit procédé (MET1) comprenant les étapes suivantes :
- recevoir au niveau de ladite station mobile (NN1, MS) un message de diffusion ou de multidiffusion à partir d'un noeud de réseau (NN2, NMS, SNN) dudit réseau de communication intérieur (ICN) pour arrêter une génération de signaux de liaison montante d'au moins une liaison de communication (RL1) de ladite station mobile (MS),
- arrêter (M12) au niveau de ladite station mobile (MS) ladite génération de signaux de liaison montante pour ladite au moins une liaison de communication (RL1), et
- transmettre (M13) à partir de ladite station mobile (MS) audit noeud de réseau (NN2, NMS, SNN) dudit réseau de communication intérieur (ICN) ou audit noeud de réseau (BS1, BS2) dudit réseau radio mobile cellulaire (CMRN) un signal de liaison montante prédéfini avec un niveau de puissance de liaison montante temporairement constant.
